# EUROPEAN PATENT SPECIFICATION

(11) **EP 4 125 476 B1**
(45) Date of publication and mention of the grant of the patent: **06.05.2026**
(21) Application number: 21782148.7
(22) Date of filing: 30.03.2021
(51) Int. Cl.: A41D 13/11, A01N 25/10, A01N 59/00, A62B 23/00, B01D 39/00, B01D 39/14, D04H 1/728

(54) **POROUS BIOCIDAL FILTER**
PORÖSER BIOZIDFILTER
FILTRE BIOCIDE POREUX

(30) Priority: 30.03.2020 US 202063001605 P
(43) Date of publication of application: 08.02.2023
(73) Proprietor: TECHNION RESEARCH & DEVELOPMENT FOUNDATION LIMITED, 3200004 Haifa (IL)
(72) Inventor: ZUSSMAN, Eyal, 3498066 Haifa (IL)
(74) Representative: Boult Wade Tennant LLP
(86) International application number: PCT/IL2021/050361
(87) International publication number: WO 2021/199043

(56) References cited:
- EP-A2- 1 523 251
- JP-A- 2008 188 082
- JP-A- 2008 188 082
- US-A1- 2011 232 653
- US-A1- 2011 232 653
- US-A1- 2016 174 631
- US-A1- 2016 174 631
- DES LIGNERIS ELISE ET AL: "Mixed Matrix Poly(Vinyl Alcohol)-Copper Nanofibrous Anti-Microbial Air-Microfilters", MEMBRANES, vol. 9, no. 87, 17 July 2019 (2019-07-17), pages 1 - 14, XP055925863, DOI: 10.3390/membranes9070087
- DES LIGNERIS ELISE, DUMÉE LUDOVIC F., AL-ATTABI RIYADH, CASTANET ERWAN, SCHÜTZ JÜRG, KONG LINGXUE: "Mixed Matrix Poly(Vinyl Alcohol)-Copper Nanofibrous Anti- Microbial Air-Microfilters", MEMBRANES, vol. 9, no. 87, 17 July 2019 (2019-07-17), pages 1 - 14, XP055925863, DOI: 10.3390/ membranes9070087

## Description

### FIELD OF INVENTION

The present invention is directed to, inter alia, non-woven fibrous compositions comprising nanofibers for use as biocidal (e.g. anti-viral) filters.

### BACKGROUND OF THE INVENTION

SARS-CoV-2 is the virus that causes COVID-19, a type of coronavirus. A subgroup of Coronaviruses is a group of viruses that cause respiratory tract infections in humans. They are enveloped viruses with a positive-sense single-stranded RNA genome. There are yet to be vaccines or antiviral drugs to prevent or treat human coronavirus infections. COVID-19 has become a major public health issue with the 2019-2020 global outbreak as it is a novel coronavirus with efficient human-to-human transmission. Those infected may be either asymptomatic or develop symptoms, including fever, cough, and shortness of breath. Cases can progress to pneumonia, multi-organ failure, and death in the most vulnerable.

An airborne viral infection is commonly caused by inhalation of droplets of moisture containing virus particles. Larger virus-containing droplets are deposited in the nose, while smaller droplets or nanoparticles find their way into the human airways or alveoli. Viruses, such as from the coronavirus family, are spread by droplets produced by coughing and sneezing with the sizes around 100-500 nm although other routes of infection may also be involved, such as facial contamination (Donnelly et al. Lancet, 361, 1761-1777, (2003)). From a filtration point of view, nano-scaled viruses and particles can, therefore, theoretically penetrate through the gaps of normal facial masks.

Facial masks using traditional filtration fabric materials are therefore inadequate for stopping nano-scaled viruses. The gaps among fibers on the facial mask are, on average, 10 to 30 µm (10,000-30,000 nm). Masks with smaller fiber gaps may result in breathing difficulty.

D1 (Elise des Ligneris et al. "Mixed Matrix Poly(Vinyl Alcohol)-Copper Nanofibrous Anti-Microbial Air-Microfilters", MEMBRANES, vol. 9, no. 87, pages 1-14) teaches composite electrospun nanofiber webs containing PVA crosslinked with copper acetate in a polymer to metal ratio of 60:40 wt %.

D2 (JP 2008188082) teaches a water-repellent non-woven microfiber fabric having a covering covering a nostril and a mounting member disposed on the covering, the covering including an inorganic porous material and having an average fiber diameter of 1 to 100 µm.

Other nano-scaled airborne viruses and particles as smoke and superfine dust can enter into the human lungs and then into the blood system through respiratory membranes. The health effect is related mainly to the sub-micron sized fraction of the particles (i.e., an aerodynamic diameter, dp, less than 1 µm).

The global concern about a virus epidemic is now well-identified problems in the modern world, but solutions to help prevent the spread of viral disease have lacked so far.

### SUMMARY OF THE INVENTION

The present invention provides, in some embodiments, compositions, and kits comprising a non-woven matrix for use as anti-microbial filters. The present invention further provides methods of reduction and/or prevention of virus transmission and methods of preparation of said compositions.

According to one aspect, there is provided a biocidal non-woven matrix comprising an electrospun nanofiber comprising at least one polymer selected from a cationic polymer, a non-ionic polymer and an anionic polymer or a combination thereof, wherein a diameter of the electrospun nanofiber is between 50 to 1500 nanometers; wherein an outer/ free surface of said matrix is characterized by a water contact angle of less than 90°, the matrix comprises a plurality of pores and is characterized by a porosity suitable for capturing a microbe in a range between 50 and 400 nm; wherein the porosity is at least 80%, and the plurality of pores is characterized by a median pore size in a range between 60 and 800 nanometers; wherein the porosity allows for air permeability, k between 10⁻⁷ [m²] and 10⁻⁵ [m²] for flow rate of 8 L/min; and wherein said matrix further comprises between 0.1 and 40% of a biocidal agent by weight of the matrix.

According to some embodiments, the biocidal non-woven matrix has a thickness, L, wherein said porosity allows for air permeability, k, between 10⁻⁷ [m²] and 10⁻⁵ [m²] for flow rate of 8 L/min.

According to some embodiments, a diameter of said nanofiber is between 50 to 1500 nanometers.

According to some embodiments, the biocidal non-woven matrix further comprises a pH reducing agent. According to some embodiments, the pH reducing agent lowers the pH to less than 5 at a location when in contact with a liquid droplet.

According to some embodiments, the at least one polymer is selected from the group consisting of a cationic polymer, a non-ionic polymer, and an anionic polymer or a combination thereof. According to some embodiments, the electrospun nanofiber comprises: (i) said cationic polymer, or (ii) said non-ionic polymer and at least one of said cationic polymer and said anionic polymer. According to some embodiments, the electrospun nanofiber comprises the cationic polymer, and the anionic polymer at a weight per weight (w/w) ratio from 2:1 to 5:1.

According to some embodiments, the non-ionic polymer is selected from the group consisting of poly(vinyl pyrrolidone) (PVP), poly(vinyl alcohol) (PVA), poly(lactic-co-glycolic acid) (PLGA), polylactic acid (PLA), polyglycolic acid (PGA), polycaprolactone (PCL) poly(vinylidene fluoride-co-hexafluoropropylene) and polysulfone, or any combination thereof.

According to some embodiments, the cationic polymer is selected from the group consisting of chitosan, a polyethyleneimine (PEI), poly(allylamine hydrochloride), a polybiguanide, polylysine, and polyarginine, or any combination thereof.

According to some embodiments, the anionic polymer is selected from the group consisting of hyaluronic acid, alginate, pectin, Poly(styrenesulfonate), poly(2-acrylamido-2-methyl-1-propanesulfonic acid), and a polyacrylate, or any combination thereof.

According to some embodiments, the matrix further comprises 0.1-10% w/w of a biocidal agent. According to some embodiments, the biocidal agent is homogeneously dispersed within said matrix. According to some embodiments, the biocidal agent is an electro-sprayed biocidal agent or airbrush-sprayed biocidal agent. According to some embodiments, the biocidal agent is introduced into the matrix by electro-spraying or airbrush-spraying.

According to some embodiments, the biocidal agent comprises a bactericidal agent, a virucidal agent, or both. According to some embodiments, the biocidal agent is selected from the group consisting of poly(vinyl pyrrolidone iodine) (PVP-I), and Chlorhexidine digluconate, Didecyldimethylammonium chloride (DDAC), Silver and Copper ions (e.g., silver sulfadiazine).

According to some embodiments, the biocidal non-woven matrix has an adhesiveness to a substrate.

According to some embodiments, the biocidal non-woven matrix has a thickness of 1 to 100 micrometers.

According to another aspect, there is provided a protective mask comprising the non-woven matrix of the instant invention. According to some embodiments, the protective mask comprises a fibrous substrate in contact with said non-woven matrix. According to some embodiments, the fibrous substrate is in the form of a mask (e.g., a surgical mask).

The biocidal non-woven matrix of the invention or the mask of comprising same, for use in reduction and/or prevention of virus transmission.

According to another aspect, there is provided a process for manufacturing the biocidal non-woven matrix of the present invention, comprising: (i) manufacturing a fibrous mat by electrospinning a polymeric solution; (ii) applying a composition comprising at least one agent selected from a biocidal agent, and a pH- reducing agent to said fibrous mat, thereby forming the biocidal non-woven matrix.

According to some embodiments, the polymeric solution has a pH of less than 5.

According to some embodiments, the applying is by electro-spraying or airbrush spraying.

Further embodiments and the full scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

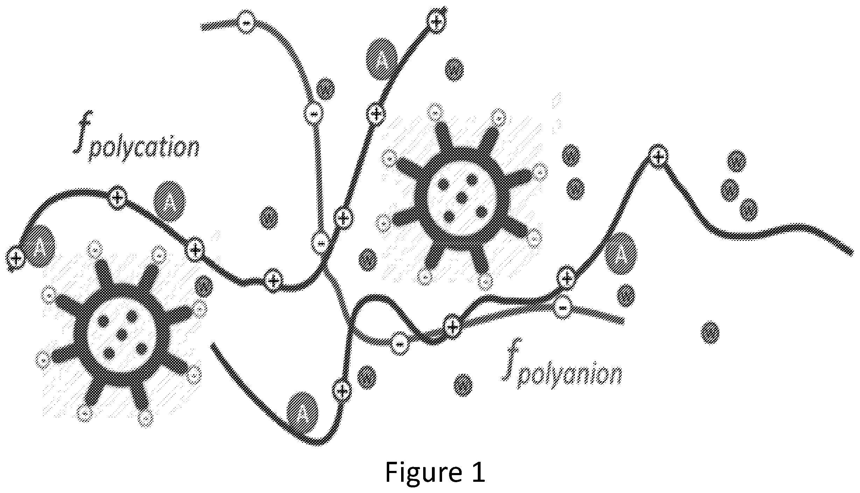

**Figure 1** represents a non-limiting schematic example of a non-woven matrix, comprising a cationic polymer ("Fpolycation"), an anionic polymer ("Fpolyanion"), water ("w) and biocidal agent ("A").
**Figures 2A-B** represent optical images (top view) of the non-woven matrix of the invention at different magnifications. The images represent biocide (yellow flecks) embedded within the non-woven matrix .
**Figure 3** represents non-limiting illustration of the implementation of the matrix of the invention ("anti-viral filter"), bonded on surgical mask.
**Figure 4** represents non-limiting illustration of a multi-layered article of the inveniton.
**Figures 5A-B** represent HRSEM images (top view) of the non-woven matrix of the invention at different magnifications.
**Figure 6** is a bar graph representing average pressure drop of the matrix of the invention ("Sticker"), a pristine surgical mask ("Surgical mask"), and the matrix of the invention attached to a surgical mask ("Sticker on a surgical mask").
**Figure 7** is a bar graph representing Filtration efficiency of NaCl particles of the matrix of the invention ("Sticker"), a pristine surgical mask ("Surgical mask"), and the matrix of the invention attached to a surgical mask ("Sticker on a surgical mask").
**Figure 8** is a bar graph representing paraffin oil filtration efficiency of the matrix of the invention attached to a surgical mask ("Sticker on surgical mask") and of a pristine surgical mask ("Surgical mask").

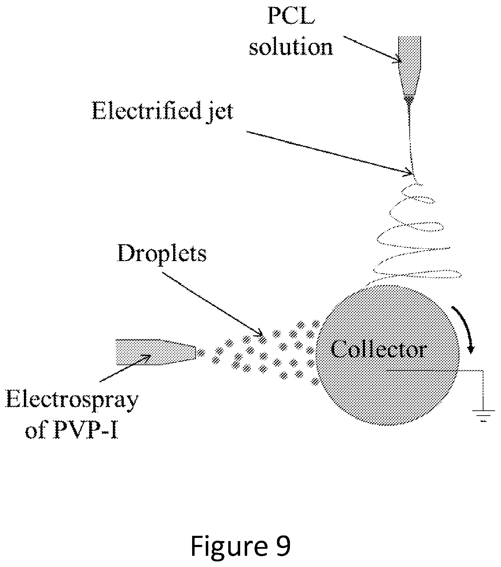

**Figure 9****:** represents a non-limiting illustration of the fabrication process of the matrix of the invention (e.g. anti-microbial filter). The polymer solution is electrospun forming fiber mat composed of nanofibers (mean diameter of about 700 nm). At the same time, the biocidal agent (e.g., PVP-I) is electrosprayed, creating droplets (diameter of about 500nm). The droplets are accumulated in between the fibers and on the fibers.
**Figures 10A-F** are images representing water contact angle of the artificial saliva with the article of the invention with an adhesive layer upon contact time of 10 s, 290 s and 650 s respectively (Figures 10A-C). The artificial saliva contact angle of sticker without an adhesive layer upon contact time of 10 s, 290 s and 650 s respectively (Figures 10D-F).

### DETAILED DESCRIPTION OF THE INVENTION

The present invention provides, in some embodiments, compositions, and kits comprising a non-woven matrix for use as anti-microbial filters.

In some embodiments, the non-woven matrix comprises an electrospun nanofiber comprising of at least one polymer selected from a cationic polymer, a non-ionic polymer and an anionic polymer or a combination thereof, wherein a diameter of said electrospun nanofiber is between 50 to 1500 nanometers; a surface of said matrix is characterized by a water contact angle of less than 90°; the matrix comprises a plurality of pores and is characterized by a porosity suitable for capturing a microbe (e.g., a virus) in the range of 50-400 nm, such as contained within a droplet, for a time sufficient to inactivate the microbe, the porosity is at least 80% and the plurality of pores is characterized by a median pore size is in the range of 60 -800 nanometers; wherein the porosity allows for air permeability, *k* between 10⁻⁷ [m²] and 10⁻⁵ [m²] for flow rate of 8 L/min; and wherein the non-woven matrix further comprises between 0.1 and 40% of a biocidal agent by weight of the matrix. In some embodiments, the non-woven matrix of the invention is capable of neutralizing a microbe or reducing microbial load on or within the non-woven matrix. In some embodiments, the non-woven matrix of the invention is a biocidal matrix. In some embodiments, the terms "non-woven matrix", "biocidal non-woven matrix" and "matrix" are used herein interchangeably.

In some embodiments, the microbe is selected from a fungi, an insect, a bacterium, a microorganism, a virus, including any combination thereof. In some embodiments, the microbe is or comprises a human pathogen (e.g. human virus and/or human microorganism). In some embodiments, the term "microbe", as used herein is or comprises an airborne pathogen.

In some embodiments, the non-woven matrix is characterized by a wettability. In some embodiments, the wettability is suitable for allowing contact of a droplet for a time sufficient to inactivate a microbe within the droplet. In some embodiments, the wettability is characterized by a water contact angle between 60 and 90°, between 30 and 50°, between 30 and 40°, between 40- and 60°, between 50 and 60°, between 60 and 70°, between 70° and 80°, including any range between.

In some embodiments, the non-woven matrix of the invention is in a form of a layer. In some embodiments, the term "layer", refers to a substantially homogeneous substance of substantially uniform-thickness. In some embodiments, the term "layer", refers to a polymeric layer.

In some embodiments, the layer has a thickness as described herein. In some embodiments, the non-woven matrix comprises an outer surface (or outer portion) facing an ambient (e.g. ambient atmosphere) and an inner surface (or an inner portion). In some embodiments, the inner surface points towards or is in contact with or adhered to an additional layer. In some embodiments, the inner surface is in contact with an adhesive layer. In some embodiments, the inner surface provides adhesiveness to the matric of the invention. In some embodiments, an outer surface of the non-woven matrix is characterized by wettability by a fluid. In some embodiments, an outer surface of the non-woven matrix is wettable by an aqueous solution. In some embodiments, an outer surface of the non-woven matrix is wettable by an aqueous solution. In some embodiments, the wettable surface of the non-woven matrix is characterized by a water contact angle of less than 90°, less than 85°, less than 80°, less than 70°, less than 65°, less than 60°, less than 55°, less than 50°, including any range between.

In some embodiments, the non-woven matrix is characterized by a porosity suitable for capturing a microbe in a range between 50 and 400 nm including nay range between, and further characterized by air permeability, k between 10⁻⁷ [m²] and 10⁻⁵ [m²], between 10⁻⁷ [m²] and 10⁻⁶ [m²], between 10⁻⁶ [m²] and 10⁻⁵ [m²], including any range between, wherein k is measured at a flow rate of 8 L/min. In some embodiments, the non-woven matrix is characterized by a water contact angle as described herein, and by a porosity suitable for capturing a microbe in a range between 50 and 400 nm.

In another embodiment, the non-woven matrix of the invention has a porosity suitable for capturing a microbe, wherein the porosity is of at least 30%, at least 35%, at least 40%, at least 45%, at least 50%, at least 55%, at least 60%, at least 65%, at least 70%, at least 75%, at least 80%, at least 85%, at least 90% or at least 95%, including any range between. In another embodiment, the porosity of the non-woven matrix of the invention is at least 80%, at least 90%, at least 92% including nay range between.

In another embodiment, the porosity comprises a plurality of openings or pores within the matrix of the invention. In another embodiment, the porosity or the plurality of pores is formed by interconnected polymeric fibers (e.g. nanofibers) within the matrix of the invention.

In some embodiments, the matrix of the invention is in a form of a fibrous mate. In some embodiments, the matrix of the invention comprises a plurality of randomly oriented nanofibers (or polymeric nanofibers). In some embodiments, the matrix of the invention is in a form of an amorphous (non-oriented or non-aligned) matrix comprising a plurality of randomly distributed nanofibers. In some embodiments, the nanofibers are substantially devoid of an alignment or an ordered (e.g. defined) structure within the matrix of the invention.

In some embodiments, the porosity suitable for capturing a microbe in a range between 50 and 400 nm is between 80 and 97%, between 80 and 85%, between 85 and 90%, between 90 and 92%, between 92 and 95%, between 95 and 97%, including any range between. In a preferred embodiment, the matrix of the invention is characterized by a porosity of between 85 and 95%, or between about 88 and about 92%, including any range between.

In some embodiments, the matrix of the invention is characterized by (i) a porosity as described herein (e.g. between 80 and 95%), and by (ii) a median pore size in a range between 60 and 1000 nm, between 60 and 100 nm, between 100 and 200 nm, between 200 and 300 nm, between 300 and 400 nm, between 400 and 500 nm, between 350 and 400 nm, between 400 and 450 nm, between 450 and 500 nm, between 500 and 600 nm, between 600 and 800 nm, between 800 and 1000 nm, including any range between.

According to some embodiments, the biocidal non-woven matrix has a thickness of between 10 and 500nm, between 10 and 50nm, between 50 and 100nm, between 100 and 200nm, between 200 and 300nm, between 300 and 500nm, including any range between. In some embodiments, the matrix has a thickness as described herein (e.g. between 100 and 200 um) and by a porosity sufficient for air permeability k of between 10⁻⁷ [m²] and 10⁻⁵ [m²] including any range between, for a flow rate of 8 L/min. Air permeability (k) is measured according to standard measurement protocols.

In some embodiments, the outer surface of the non-woven matrix of the invention at least partially ionized (e.g. comprising a positive or a negative surface charge). In some embodiments, the non-woven matrix comprises a fiber being positively charged. In some embodiments, the non-woven matrix is capable of binding to a microbe (e.g. forming a stable noncovalent bond, so as to immobilize the microbe). In some embodiments, the non-woven matrix is capable of electrostatically binding or attracting the microbe. In some embodiments, the polymeric solution (for the electrospinning process) is characterized by a pH lower than 5. Accordingly, in some embodiments, a non-woven matrix comprises a cationic polymer as a biocidal agent.

In some embodiments, the non-woven matrix comprises an electrospun nanofiber comprising the at least one polymer.

According to some embodiments, the at least one polymer is selected from the group consisting of a cationic polymer, a non-ionic polymer, and an anionic polymer or a combination thereof. According to some embodiments, the electrospun nanofiber comprises: (i) said cationic polymer, or (ii) non-ionic polymer and at least one of cationic polymer and anionic polymer. According to some embodiments, the electrospun nanofiber comprises the cationic polymer, and the anionic polymer at a weight per weight (w/w) ratio from 2:1 to 5:1, from 2:1 to 3:1, from 3:1 to 5:1, including any range between.

According to some embodiments, the polymer is selected from the group consisting of polymer selected from the group consisting of: poly (e-caprolactone) (PCL), polyamide, poly(siloxane), poly(silicone), poly(ethylene), poly(vinyl pyrrolidone), poly(2-hydroxy ethylmethacrylate), poly(N-vinyl pyrrolidone), poly(methyl methacrylate), poly(vinyl alcohol), poly(acrylic acid), poly(vinyl acetate), polyacrylamide, poly(ethylene-co-vinyl acetate), poly(ethylene glycol), poly(methacrylic acid), polylactide, polyglycolide, poly(lactide-coglycolide), polyanhydride, polyorthoester, poly(carbonate), poly(acrylo nitrile), poly(ethylene oxide), polyaniline, polyvinyl carbazole, polystyrene, poly(vinyl phenol), polyhydroxyacid, poly(caprolactone), polyanhydride, polyhydroxyalkanoate, polyurethane, collagen, albumin, alginate, chitosan, starch, hyaluronic acid, and whereas the electrospun coat comprises a polymer selected from the group consisting of poly(acrylic acid), poly(vinyl acetate), polyacrylamide, poly(ethylene-co-vinyl acetate), poly(ethylene glycol), poly(methacrylic acid), polylactide polyglycolide, poly(lactide-coglycolide), polyanhydride, polyorthoester, poly(carbonate), poly(ethylene oxide), polyaniline, polyvinyl carbazole, polystyrene, poly(vinyl phenol), polyhydroxyacid, alginate, starch, hyaluronic acid.

According to some embodiments, the non-ionic polymer is selected from the group consisting of poly(vinyl pyrrolidone) (PVP), poly(vinyl alcohol) (PVA), poly(lactic-co-glycolic acid) (PLGA), polylactic acid (PLA), polyglycolic acid (PGA), polycaprolactone (PCL) poly(vinylidene fluoride-co-hexafluoropropylene) and polysulfone, or any combination thereof.

The According to some embodiments, the cationic polymer is selected from the group consisting of chitosan, a polyethyleneimine (PEI), poly(allylamine hydrochloride), a polybiguanide, polylysine, and polyarginine, or any combination thereof.

According to some embodiments, the anionic polymer is selected from the group consisting of hyaluronic acid, alginate, pectin, poly(styrenesulfonate), poly(2-acrylamido-2-methyl-1-propanesulfonic acid), and a polyacrylate, or any combination thereof.

According to some embodiments, the polymer of the invention is characterized by a mean molecular weight (MW) of between 10.000 and 1.000.000 Da, between 10.000 and 50.000 Da, between 50.000 and 100.000 Da, between 100.000 and 500.000 Da, between 100.000 and 200.000 Da, between 200.000 and 500.000 Da, between 500.000 and 1.000.000 Da, including nay range between.

In some embodiments, the non-woven matrix comprises a biocidal agent at an amount sufficient for inactivation of a microbe, or forreduction or eradication of microbial load on or within the matrix, wherein reduction or eradication are as described herein. In some embodiments, the non-woven matrix comprises poly(vinyl pyrrolidone iodine) (PVP-I) as the biocidal agent. In some embodiments, the biocide is a cationic polymer. In some embodiments, the biocide is cationic polymer selected from the group consisting of chitosan, a polyethyleneimine (PEI), poly(allylamine hydrochloride), a polybiguanide, polylysine, and polyarginine, or any combination thereof. Other biocidal agents are well-known in the art.

In some embodiments, the non-woven matrix comprises a biocidal agent at an amount sufficient for reducing microbial load by at least 100%, at least 500%, at least 1000%, at least 10000%, at least 100000%, including any range between, compared to the initial load. In some embodiments, the non-woven matrix comprises a biocidal agent at an amount sufficient for complete eradication (e.g. killing) or immobilization (e.g. deactivation) of the microbe. In some embodiments, the biocidal efficiency of the matrix can by determined by standard test methods (e.g. as described in the Examples section).

According to some embodiments, the matrix of the invention further comprises between 0.1 and 10% w/w, between 0.1 and 1% w/w, between 1 and 5% w/w, between 5 and 10% w/w, between 0.1 and 0.5% w/w, between 0.5 and 1% w/w, between 10 and 11% w/w, between 11 and 40% w/w, between 10 and 20% w/w, between 20 and 30% w/w, between 30 and 40% w/w, of a biocidal agent, including nay range between. In some embodiments, the matrix of the invention comprises about 30% by weight of the biocidal agent.

In some embodiments, a w/w ratio between the biocidal agent and the polymeric nanofibers within the matrix of the invention is between 1:10 and 1:1, between 1:10 and 1:8, between 1:8 and 1:6, between 1:6 and 1:4, between 1:4 and 1:3, between 1:3 and 1:2, between 1:2 and 1:1, including nay range between.

In some embodiments, the matrix and/or the nanofibers are impregnated with the biocidal agent. In some embodiments, the biocidal agent is embedded on top and/or within the matrix. In some embodiments, the biocidal agent is dispersed within the matrix. In some embodiments, the biocidal agent is at least partially located within the pores of the matrix. According to some embodiments, the biocidal agent is homogeneously dispersed within said matrix. In some embodiments, the biocidal agent is in a form of a layer. In some embodiments, the biocidal agent is in a form of a uniform layer.

In some embodiments, the biocidal agent is uniformly distributed within the entire matrix of the invention (e.g. being substantially devoid of agglomerates greater than 1mm, wherein substantially is as described herein). In some embodiments, the biocidal agent is on top of the nanofibers of the matrix. In some embodiments, the biocidal agent is in contact with or stably bound the nanofibers of the matrix.

In some embodiments, the biocidal agent is stably bound the nanofibers of the matrix, so that the matrix retains at least 70%, at least 80%, at least 90%, at least 95%, at least 97% by weight of the initial content of the biocidal agent upon prolonged storage under normal storage conditions.

In some embodiments, the matrix of the invention or the multi-layered article, as described herein is stable (e.g. the matrix and/or the article substantially retains the initial content of the biocidal agent, and/or maintains at least 90% of: surface roughness, structural form, or chemical composition thereof) upon prolonged storage under normal storage conditions. In some embodiments, the matrix of the invention or the multi-layered article, as described herein is stable over a time period ranging from 1 day to 1month (m), from 1 m to 2m, from 2 m to 4m, from 4 m to 6m, from 6 m to 8m, from 8 m to 10m, from 10 m to 12m, form 1 year (y) to 5 y, including any range between.. In some embodiments, the term "prolonged storage" comprises a time period of between 1 day to 5 y, including any range between. In some embodiments, the term "normal storage conditions" comprises an ambient conditions such as exposure to UV/vis light, moisture of between 10 and 95%, temperature of between -20 and 50⁰C, etc.

In some embodiments, the matrix of the invention or the multi-layered article is physically stable (e.g. maintains at least 80%, at least 90%, at least 95% of: its physical properties and/or physical intactness; of its thickness, length dimension and/or width dimension; of its geometrical shape, etc.) upon prolonged storage under normal storage conditions.

In some embodiments, the matrix of the invention or the multi-layered article is chemically stable (e.g. maintains at least 80%, at least 90%, at least 95% of its chemical structure) upon prolonged storage under normal storage conditions.

In some embodiments, the matrix of the invention or the multi-layered article is referred as stable, if upon prolonged storage under normal storage conditions the matrix of the invention or the multi-layered article is substantially devoid of layer separation and/or loss of the biocidal agent of more than 30% by weight, compared to the initial content of the biocidal agent (e.g. a weight content immediately upon manufacturing of the matrix of the invention or the multi-layered article).

According to some embodiments, the biocidal agent is an electro-sprayed biocidal agent or airbrush-sprayed biocidal agent. According to some embodiments, the biocidal agent is introduced into the matrix by electro-spraying or airbrush-spraying.

According to some embodiments, the biocidal agent comprises a bactericidal agent, a virucidal agent, or both. According to some embodiments, the biocidal agent is selected from the group consisting of poly(vinyl pyrrolidone iodine) (PVP-I), and Chlorhexidine digluconate, Didecyldimethylammonium chloride (DDAC), Silver and Copper ions (e.g., silver sulfadiazine).

According to some embodiments, the biocidal non-woven matrix further comprises a pH reducing agent. According to some embodiments, the pH reducing agent lowers the pH to less than 5 at a location when in contact with a liquid droplet. In some embodiments, the location is on or within the matrix of the invention. In some embodiments, the location is in close proximity to the droplet.

According to some embodiments, the pH reducing agent is a salt. According to some embodiments, the pH reducing agent is an acid. According to some embodiments, the acid is an organic acid. In some embodiments, the acid is an inorganic acid. According to some embodiments, the salt comprises hydronium ions. According to some embodiments, the salt comprises a carbonate salt, a bicarbonate salt, an acetate salt, a formate salt, an ammonium salt or any combination thereof. In some embodiments, the salt is in contact with or bound to the electrospun nanofiber. In some embodiments, the salt is in contact with or bound to the outer surface of the electrospun nanofiber.

According to some embodiments, the biocidal non-woven matrix has an adhesiveness to a substrate. In some embodiments, the non-woven matrix is bound to an adhesive layer. In some embodiments, the inner surface or inner portion of the non-woven matrix is bound to an adhesive layer. In some embodiments, the adhesive layer is configured to provide sufficient adhesive strength of the matrix to the substrate, thereby stably adhering the matrix to the substrate. In some embodiments, the adhesive layer is configured to provide sufficient adhesive strength so as to maintain the matrix adhered to the substrate for a time period of between 1 hour and 10 days, including any range between. In some embodiments, the adhesive layer comprises a pressure sensitive adhesive. In some embodiments, the adhesive is attached in/on at least one portion of the matrix (or matrix layer). In some embodiments, the adhesive is attached to at least a portion of the inner surface of matrix of the invention.

In some embodiments, the term "portion" should be construed as meaning part (e.g., 10%, 20%, 30%, or 40%) or the entire surface (e.g., the inner surface) of the matrix. In another embodiment, the term "portion" refers to the inner surface.

In another embodiment, the adhesive material is in the form of a layer or coating. The layer or coating may be in the form of a thin layer, characterized by a thickness of e.g., 0.01 mm, 0.05 mm, 0.1 mm, 0.5 mm, 1 mm, 2 mm, or 3 mm, including any value and range therebetween.

Non-limiting exemplary adhesives are selected from acrylates e.g., triethylene glycol dimethacrylate, and urethane dimethacrylate. Other adhesives are well-known in the art.

The non-woven matrix described herein, e.g., in the form of an adhesive membrane, can be in different sizes depending on the type of surface to be sampled. The shape of the matrix can be without limitation, circular, oval, square, rectangular, or any other form suitable to the purpose of the matrix. In another embodiment, the matrix is affixed (e.g. bound or adhered) to a mask. The filter can be permanently or temporarily affixed to a mask. In another embodiment, the matrix is disposable.

In some embodiments, the non-woven matrix further comprises a colorimetric reactant. According to some embodiments, the invention provides compositions for sampling and detecting molecules of interest, such as (i) moisture suspected as having viral particles, (ii) a microbe, for immediate colorimetric detection.

Colorimetric detection methods are a low-cost tool for assessing the nature and extent of contamination and enabling on-site screening. The term "colorimetric" is defined as an analysis where the reagent or reagents of the composition of the invention produce a color change in the presence of an analyte, i.e., droplets suspected as having viral particles.

In some embodiments, the nanofiber of the non-woven matrix is an electrospun nanofiber. According to some embodiments, the compositions of the invention comprise at least one type of electrospun nanofiber and at least biocide suitable for inactivating a virus encapsulated therein.

According to some embodiments, the porosity comprises a median pore size in a range between 60 and 1000 nanometers, between 60 and 100 nm, between 100 and 200 nm, between 200 and 300 nm, between 300 and 400 nm, between 400 and 500 nm, between 500 and 600 nm, between 600 and 700 nm, between 700 and 800 nm, between 800 and 900 nm, between 900 and 1000 nm or any combination thereof. According to some embodiments, the porosity comprises a median pore size in a range between about 10 nm to about 1000 nm, e.g., 10 nm, 20 nm, 30 nm, 40 nm, 50 nm, 60 nm, 70nm, 80 nm, 90 nm, 100 nm, 110 nm, 120 nm, 130 nm, 140 nm, 150 nm, 200 nm, 300 nm, 400 nm, 500 nm, 600 nm, 700 nm, 800 nm, 900 nm, 1000 nm, or any sub-range within about 10 nm to about 500 nm, e.g., any range between any two of the above sizes. In some embodiments, the median pore size within the matrix is between 350 and 450 nm. In some embodiments, the median pore size within the matrix of the invention is about 400 nm.

According to some embodiments, the biocidal non-woven matrix has a thickness of 1 to 100 micrometers, between 1 and 10 um, between 10 and 30 um, between 30 and 50 um, between 50 and 100 um or any combination thereof.

According to some embodiments, a diameter of said nanofiber is between 50 and 1500 nanometers, between 50 and 100 nm, between 100 and 200 nm, between 200 and 300 nm, between 300 and 400 nm, between 400 and 500 nm, between 500 and 700 nm, between 700 and 1000 nm, between 1000 and 1500 nm, or any combination thereof. According to some embodiments, a diameter of said nanofiber is between 300 to 1000 nanometers including any range between.

The term "electrospun" or "(electro)sprayed" when used in reference to polymers are recognized by persons of ordinary skill in the art and includes fibers produced by the respective processes. Such processes are described in more detail infra.

Methods for manufacturing electrospun elements as well as encapsulating or attaching molecules thereto are disclosed, inter alia, in WO 2014/006621, WO 2013/172788, WO 2012/014205, WO 2009/150644, WO 2009/104176, WO 2009/104175, WO 2008/093341 and WO 2008/041183.

Manufacturing of electrospun elements can be done by an electrospinning process, which is well known in the art. Following is a non-limiting description of an electrospinning process. One or more liquefied polymers (i.e., a polymer in a liquid form such as a melted or dissolved polymer) are dispensed from a dispenser within an electrostatic field in the direction of a rotating collector. The dispenser can be, for example, a syringe with a metal needle or a bath provided with one or more capillary apertures from which the liquefied polymer(s) can be extruded, e.g., under the action of hydrostatic pressure, mechanical pressure, air pressure and high voltage.

The collector (e.g., a rotating drum) serves to collect the electrospun element thereupon. Typically, but not obligatorily, the collector has a cylindrical shape. The dispenser (e.g., a syringe with a metallic needle) is typically connected to a source of high voltage, preferably of positive polarity, while the collector is grounded, thus forming an electrostatic field between the dispenser and the collector. Alternatively, the dispenser can be grounded while the collector is connected to a source of high voltage, preferably with negative polarity. As will be appreciated by one ordinarily skilled in the art, any of the above configurations establishes motion of positively charged jet from the dispenser to the collector. Inverse electrostatic configurations for establishing motions of negatively charged jet from the dispenser to the collector are also contemplated.

At a critical voltage, the charge repulsion begins to overcome the surface tension of the liquid drop. The charged jets depart from the dispenser and travel within the electrostatic field towards the collector. Moving with high velocity in the inter-electrode space, the jet stretches, and solvent therein evaporates, thus forming fibers which are collected on the collector, thus forming the electrospun element.

As used herein, the phrase "electrospun element" refers to an element of any shape including, without limitation, a planar shape, and a tubular shape, made of one or more non-woven polymer fiber(s), produced by process of electrospinning. When the electrospun element is made of a single fiber, the fiber is folded thereupon; hence it can be viewed as a plurality of connected fibers. It is to be understood that a more detailed reference to a plurality of fibers is not intended to limit the scope of the present invention to such a particular case. Thus, unless otherwise defined, any reference herein to a "plurality of fibers" applies also to a single fiber and vice versa. In some embodiments, the electrospun element is an electrospun fiber, such as electrospun nanofiber. As used herein, the phrase "electrospun fiber" relates to a fiber formed by the process of electrospinning.

According to some embodiments of the invention, the thickness of the electrospun fiber of the invention can vary from a few nanometers to several micrometers, such as from about 100 nm to about 20 µm (micrometer), e.g., from about 200 nm to about 10 µm, from about 100 nm to about 5 µm, from about 100 nm to about 1 µm, e.g., about 500 nm.

According to some embodiments of the invention, the electrospun fiber may have a length which is from about 0.1 millimeter (mm) to about 20 centimeter (cm), e.g., from about 1-20 cm, e.g., from about 1-10 cm. According to some embodiments of the invention, the length (L) of the electrospun fibers of some embodiments of the invention can be several orders of magnitude higher (e.g., 10 times, 100 times, 1000 times, 10,000 times, e.g., 50,000 times) than the fiber's diameter (D).

In some embodiments, the matrix is characterized by breathability. In some embodiments, a breathable matrix as used herein, is devoid of a respiratory resistance. In some embodiments, breathability is expressed by a pressure drop across the matrix (e.g. in a form of a layer). In some embodiments, the pressure drop is below 0.6 kPa, below 0.5 kPa, below 0.4 kPa, below 0.3 kPa, below 0.2 kPa including any value therebetween. In some embodiments, the pressure drop is between 0.5 and 25 kPa, between 0.5 and 1 kPa, between 1 and 5 kPa, between 5 and 10 kPa, between 10 and 15 kPa, between 15 and 20 kPa, between 20 and 25 kPa or any range therebetween.

In some embodiments, the matrix of the invention is characterized by air permeability being in a range between 1 and 100, between 1 and 5, between 5 and 10, between 10 and 20, between 20 and 30, between 30 and 50, between 50 and 100 cm³/cm²/s, including any range between.

In some embodiments, the matrix of the invention is characterized by pressure drop of less than 20 Pa/cm, less than 10 Pa/cm, less than 8 Pa/cm, less than 7 Pa/cm, less than 5 Pa/cm, less than 3 Pa/cm, including any range between, wherein the pressure drop is measured by air flow rate of 8 L/min.

### Article

In another aspect, there is an article comprising the matrix of the invention in contact with or bound to a substrate. In some embodiments, the substrate is any one of a polymeric substrate, a glass substrate, a metal substrate, a woven or a non-woven fabric, etc.

In some embodiments, the article of the invention comprises a plurality of layers wherein each of the layers is bound to at least one subsequent layer, and wherein the outer layer or the first layer comprises the matrix of the invention. In some embodiments, the article of the invention is a multi-layered article.

In some embodiments, the multi-layered article of the invention comprises the first layer comprising the matrix of the invention, wherein the first layer is bound to an additional layer comprising a porous matrix. In some embodiments, the additional layer is or comprises a porous matrix formed by a plurality of polymeric microfibers. In some embodiments, the additional layer is or comprises a porous non-woven matrix formed by a plurality of polymeric microfibers. In some embodiments, the additional layer is a support layer configured to provide mechanical strength to the first layer and/or to the article of the invention. In some embodiments, the additional layer is a porous support layer configured to provide sufficient mechanical strength and air permeability to the article of the invention, wherein air permeability is as described herein.

In some embodiments, the multi-layered article of the invention comprising the matrix bound to the additional layer substantially retains the properties of the matrix as described herein (e.g. breathability, wettability, biocidal properties, etc.).

In some embodiments, the multi-layered article of the invention is a self-supported article. In some embodiments, the multi-layered article of the invention is a self-supported membrane. In some embodiments, the multi-layered article of the invention is in a form of a membrane. In some embodiments, the multi-layered article of the invention is in a form of a multilayer membrane. In some embodiments, the multi-layered article of the invention is in a form of a self-supported multilayer membrane. In some embodiments, the multi-layered article of the invention is a stable multilayer article, wherein the layers remained substantially bound or adhered one to each other upon prolonged storage under normal storage conditions, as described herein.

In some embodiments, the additional layer predetermines or supports the mechanical properties of the article (such as mechanical strength, shapeability, deformability, flexibility, elasticity, etc.). In some embodiments, the multi-layered article of the invention is deformable. In some embodiments, the multi-layered article of the invention is shapable. In some embodiments, the multi-layered article of the invention is pliable or flexible. In some embodiments, the multi-layered article of the invention is characterized by elasticity. In some embodiments, the mechanical properties of the article are predetermined by the any one of the first layer and/or the additional layer. In some embodiments, the multi-layered article of the invention is capable to retain at least 80%, at least 90%, at least 95%, at least 97% of its geometrical shape upon deformation.

In some embodiments, the multi-layered article of the invention (or the stable article of the invention) is characterized by a mechanical strength being of above 0.3MPa, above 0.5MPa, above 0.7MPa, above 0.9MPa, above 1MPa, above 1.5MPa, above 2MPa, above 2.5MPa, above 3MPa, above 3.5MPa, above 4MPa, including any range or value therebetween.

In some embodiments, the multi-layered article of the invention is characterized by a mechanical strength sufficient for retaining at least 80%, at least 90%, at least 95%, at least 97% of the geometrical shape and/or physical structure of the article, including any range between.

In some embodiments, the additional layer is a porous support layer configured to provide a mechanical support to the membrane of the invention. In some embodiments, the additional layer is a porous support layer configured to enhance physical stability (e.g. mechanical strength) of the membrane of the invention, wherein enhance is by at least 2 times, 10, 50, 100, 1000 times or any range between, compared to the pristine matrix (e.g. devoid of the support layer).

In some embodiments, the additional layer is a porous support layer configured to provide a mechanical strength sufficient for retaining at least 80%, at least 90%, at least 95%, at least 97% of the geometrical shape and/or physical structure of the article, including any range between. In some embodiments, the additional layer is a porous support layer configured to provide a mechanical strength sufficient for retaining at least 80%, at least 90%, at least 95%, at least 97% of the geometrical shape and/or physical structure of the article; and further configured to provide air permeability thereto.

In some embodiments, the additional layer is a porous support layer configured to provide a mechanical strength to the article and is configured to maintain the air pressure drop of the article being less than 49 Pa/cm², less than 45 Pa/cm², less than 40 Pa/cm², less than 35 Pa/cm², less than 30 Pa/cm², including any range between.

In some embodiments, the multi-layered article of the invention comprises the first layer bound to the additional layer comprising a porous matrix and wherein said multi-layered article is characterized by air pressure drop of less than 49 Pa/cm².

In some embodiments, the additional layer is in a form of a matrix comprising a plurality of randomly distributed polymeric fibers. In some embodiments, the additional layer is formed by or comprises a plurality of polymeric microfibers, having a mean diameter of between 1 and 100um, between 1 and 500um, between 1 and 10um, between 10 and 100um, between 10 and 50um, including any range between.

In some embodiments, the polymeric microfibers are electrospun spun-bond, or spun-lace fibers. In some embodiments, the additional layer is in a form of a spun-bond, or a spun-lace non-woven material. Various spun-bond or spun-lace non-woven fabrics are known in the art.

In some embodiments, the polymeric microfibers comprise a polymer selected from the group consisting of: a polyolefin (e.g. polyethylene, polypropylene, etc.), a polyester (e.g. polyethylene terephthalate), and a polyamide (e.g. Nylon), optionally wherein said polymer is selected form polyethylene, polypropylene (PP), and polyethylene terephthalate (PET), including any combination or a copolymer thereof. In some embodiments, the polymeric microfibers comprise PP and/or PET.

In some embodiments, the additional layer is characterized by a textile weight of said additional layer is between 40 to 60 g/m², between 40 and 50 g/m², between 50 and 60 g/m², including any range between.

In some embodiments, the additional layer is characterized by a thickness of between 100 and 1000 um, between 100 and 500 um, between 100 and 500 um, between 500 and 1000 um, between 100 and 300 um, between 300 and 500 um, including any range between.

In some embodiments, the additional layer is non-covalently bound to the matrix of the invention. In some embodiments, the additional layer is adhered to the matrix of the invention. In some embodiments, the additional layer is bound to the matrix of the invention by an adhesive layer.

In some embodiments, the multi-layered article of the invention comprises an outer surface facing the ambient and an inner surface. In some embodiments, the outer surface comprises the matrix of the invention. In some embodiments, the outer surface is a biocidal surface.

In some embodiments, the inner surface of the article is configured to face and/or to be in contact with the subject. In some embodiments, the inner surface of the article is substantially devoid of a biocidal agent. In some embodiments, the inner surface of the article is configured to be in contact with a substrate. In some embodiments, the inner surface of the article is characterized by an adhesiveness to a substrate. In some embodiments, the inner surface of the article further comprises an adhesive layer.

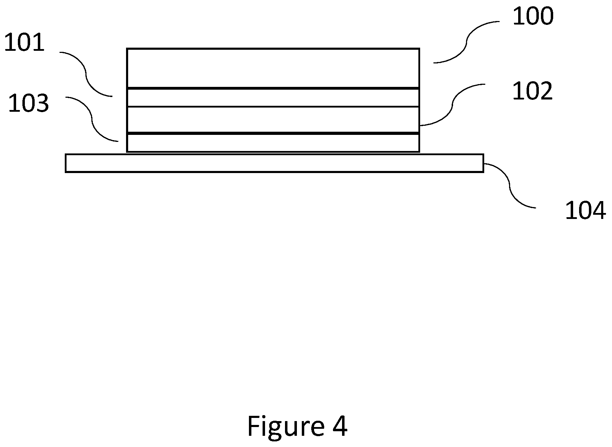

Reference is now made to Figure 4 showing an exemplary article of the invention. In one aspect, the article comprises a plurality of layers, wherein each of the plurality of layers is the same or different. In one aspect, the article comprises a plurality of distinct layers. In one aspect, the article is a porous breathable multilayer article of the invention comprising the biocidal non-woven matrix of the invention as the outer layer. In one aspect, the article comprises an upper layer or the outer layer (100), facing the ambient. In one aspect, the outer layer 100 is or comprises the matrix of the invention. In one aspect, the outer layer 100 is or comprises the polymeric nano-fibers of the invention impregnated with a biocidal agent (e.g. PVP-I). In one aspect, the outer layer 100 is a biocidal and/or filtering layer. In one aspect, the outer layer 100 has a thickness of between 10 and 500 um, including any range between. In one aspect, the outer layer 100 and/or any one of the subsequent layers (101 to 103) has a length dimension of between 5 and 50cm, and a width dimension of between 3 and 20 cm, including any range between. In one aspect, the dimension (e.g. width and/or length) of the article is compatible with the dimensions of the support, e.g. a face mask.

In one aspect, the outer layer 100 is bound or in contact with an additional layer 102. In one aspect, the additional layer 102 provides a mechanical support to the outer layer 100, as described herein. In one aspect, the additional layer 102 is a support layer, configured to stabilize or to provide mechanical properties to the multi-layered article of the invention and/or to the outer layer 100. In one aspect, the outer layer 100 is bound or in contact with an additional layer 102 via an adhesive layer 101.

In one aspect, the adhesive layer 101 is positioned between the outer layer 100 and the additional layer 102.

In one aspect, the inner portion of the additional layer 102 faces or bound to the outer layer 100. In one aspect, the outer portion of the additional layer 102 faces the substrate. In one aspect, the outer portion of the additional layer 102 is in contact with or comprises an adhesive layer 103.

In one aspect, the adhesive layer 103 is configured for attachment to the substrate 104. In one aspect, the adhesive layer 103 has an adhesive strength sufficient for stably adhering and/or binding to the substrate (e.g. devoid of disintegration for a period of between 1 hour and 10 days including nay range between). In some embodiments, the adhesive layer 103 and/or 101 comprises the same or different adhesive. In some embodiments, the adhesive layer 103 comprises a pressure sensitive adhesive.

In some embodiments, the article comprises the matrix of the invention bound to a support layer and wherein the support layer is further bound or adhered to a substrate, wherein the substrate is as described herein.

In some embodiments, the substrate is or comprises any one of metallic substrate, glass substrate, paper substrate, polymeric substrate, or any combination thereof.

In some embodiments, the substrate is or comprises a porous substrate. In some embodiments, the substrate is or comprises a face mask. In some embodiments, the multi-layered article of the invention is capable of adhesion to a face mask. In some embodiments, the multi-layered article of the invention is further bound or adhered to a face mask. In some embodiments, the multi-layered article of the invention capable of adhesion to a face mask has dimensions (width and/or length) and/or geometrical shape compatible with the dimensions of the face mask. In some embodiments, the multi-layered article of the invention capable of adhesion to a face mask is capable of obtaining a predetermined shape (e.g. being deformable or flexible), such as the shape of the face mask, and/or the shape of a face of a subject. In some embodiments, the multi-layered article of the invention is capable to retain its shape upon deformation.

In some embodiments, the article in contact with the substrate is characterized by an increase of air pressure drop of between 2 and 15%, between 2 and 5%, between 5 and 8%, between 8 and 10%, between 10 and 15%, compared to air pressure drop of the substrate without the article of the invention. In some embodiments, the article in contact with the substrate enhances the air pressure drop thereof by at most 15%, at most 10%, at most 8%, at most 5%, compared to air pressure drop of the substrate without the article of the invention.

In some embodiments, the multi-layered article of the invention is in a form of a face mask. In some embodiments, the multi-layered article of the invention is or comprises a face mask, wherein the face mask comprises the matrix of the invention as an outer layer (e.g. a filtering layer facing the ambient air) and wherein the outer layer is bound to at least one additional layer facing or in contact with the subject. In some embodiments, the at least one additional layer comprises two, three or more additional layers.

In some embodiments, the at least one additional layer comprises a non-woven polymeric matrix. In some embodiments, the multi-layered article of the invention is or comprises a face mask, wherein the outer layer (e.g. filtering layer) has been replaced so as to comprise the matrix of the invention or the multi-layered article of the invention.

In some embodiments, the multi-layered article of the invention or the biocidal non-woven matrix of the invention is configured for reduction or prevention of microbe transmission through at least a portion of the article and/or the matrix of the invention. In some embodiments, the multi-layered article of the invention or the biocidal non-woven matrix of the invention is characterized by microbe filtering capability. In some embodiments, the multi-layered article of the invention or the biocidal non-woven matrix of the invention is characterized by biocidal properties.

In some embodiments, the multi-layered article of the invention or the biocidal non-woven matrix of the invention is configured for reduction and/or inhibition of microbial load on or within the article or the matric of the invention, wherein reduction or inhibition is as described herein.

In some embodiments, the multi-layered article of the invention (e.g. in a form of a membrane) is capable of substantially retaining or filtering particles of a particle size in a range between 50 and 1000nm, between 50 and 100nm, between 100 and 200nm, between 200 and 300nm, between 300 and 500nm, between 500 and 700nm, between 700 and 1000nm, between 1 and 10 um, including any range between. In some embodiments, the multi-layered article of the invention (e.g. in a form of a membrane) is capable of substantially retaining or filtering particles of a particle size of at least 0.1 um, at least 0.2 um, at least 0.3 um, at least 0.5 um, at least 1 um, at least 3 um, at least 5 um, including any range between. In some embodiments, the particles are referred to solid particles. In some embodiments, the article and/or the matrix of the invention is characterized by a filtration efficiency of between 30 and 70%, between 30 and 50%, between 50 and 70%, between 50 and 80%, including any range between. Exemplary filtration efficiency is described in the Examples section. In some embodiments, the matrix of the invention in contact with or bound to a substrate enhances the filtration efficiency of the substrate by at least 100%, at least 300%, at least 500%, at least 1000%, including any range between.

### Manufacturing process

According to some embodiments of the invention, the electrospun fiber is produced by a method which comprises electrospinning a polymeric solution. As used herein, the phrase "polymeric solution" refers to a soluble polymer, i.e., a liquid medium containing one or more polymers, co-polymers or blends of polymers dissolved in a solvent. Typically, the polymer used in electrospinning processes can be a natural, synthetic, biocompatible and/or biodegradable polymer.

The phrase "synthetic polymer" refers to polymers that are not found in nature. Examples include, but are not limited to, aliphatic polyesters (e.g. PCL), poly(amino acids), copoly(ether-esters), polyalkylenes, oxalates, polyamides, tyrosine derived polycarbonates, poly(iminocarbonates), polyorthoesters, polyoxaesters, polyamidoesters, polyoxaesters containing amine groups, poly(anhydrides), polyphosphazenes, and combinations thereof. Further examples include: fluoropolymer polyethylene, polyethylene terephthalate, poly(tetrafluoroethylene), polycarbonate, polypropylene and poly(vinyl alcohol), and combinations thereof.

Laboratory equipment for electrospinning can include, for example, a spinneret (e.g. a syringe needle) connected to a high-voltage (5 to 50 kV) direct current power supply, a syringe pump, and a grounded collector. A solution such as a polymer solution, sol-gel, particulate suspension or melt is loaded into the syringe and this liquid is extruded from the needle tip at a constant rate (e.g. by a syringe pump).

In some embodiments, parameters of the electrospinning process may affect the resultant substrate (e.g. the thickness, porosity, etc.). Such parameters may include, for example, molecular weight, molecular weight distribution and architecture (branched, linear etc.) of the polymer, solution properties (viscosity, conductivity & and surface tension), electric potential, flow rate, concentration, the distance between the capillary and collection screen, ambient parameters (temperature, humidity and air velocity in the chamber) and the motion and speed of the grounded collector. Accordingly, in some embodiments, the method of producing a substrate, as described herein, includes adjusting one or more of these parameters.

In some embodiments, the nano-fibers of the invention are manufactured by electrospinning of a polymer matrix of 18% wt/v (11.73% wt/wt) PCL of average Mw of 100,000 g/mol, dissolved in chloroform:DMF (3:1 v/v), to form a polymeric solution.

In some embodiment, the polymeric solution is electrospun such as by applying voltage in the range of 9-15 kV. In some embodiment, the spinneret-collector is in a distance of 12 cm, and the flow rate of the polymer solution is in the range of 3-10 mL/h.

In some embodiment, a solution of 10% w/w of a biocide, such as povidone-iodine (IODO-VIT solution, VITAMED, Israel) is suspended in 30% w/w ethanol (or 70%) and electro-sprayed with a flow rate in the range of 5 to 20 mL/h and applied voltage in the range of 10-15 kV, thereby forming the biocidal non-woven matrix of the invention. In some embodiment, the spinneret-collector distance is about 11 cm.

In some embodiment, the manufacturing of the matrix and the application of the biocide (e.g. by electro spraying) is performed in one step (e.g. simultaneously) or in two subsequent steps. In some embodiment, the manufacturing process comprises (i) forming the matrix of the invention by electrospinning, and (ii) applying a composition comprising a biocidal agent is on the matrix of the invention, thereby forming the biocidal non-woven matrix.

In some embodiment, the process for manufacturing the multi-layered article of the invention comprises providing the biocidal non-woven matrix (formed according to the process described herein) and contacting the biocidal non-woven matrix with an additional layer (e.g. support layer, as described herein). In some embodiment, the additional layer is in a form of a porous matrix comprising spun-bond, or spun lace polymeric fibers, as described herein.

Spun-bond, or spun lace fibers described herein (according to any one of the respective embodiments) may optionally be produced by any suitable technique for preparing fibers (including macro-sized fibers, micro-sized fibers and nano-sized fibers), such as conventional fiber-spinning techniques. Such techniques include, for example, solution spinning, wet spinning, dry spinning, melt spinning and gel spinning. Each spinning method imparts specific physical dimensions and mechanical properties of the resulting fibers, and can be tuned to give the desired characteristics according to the required application of the fibers and layer of fibers described herein.

In some embodiment, contacting comprises applying additional layer on top of the first layer, wherein the first layer is or comprises the biocidal non-woven matrix. In some embodiment, contacting comprises placing the the biocidal non-woven matrix parallel to the additional layer (e.g., in a stacked formation), and pressing the biocidal non-woven matrix and the additional layer together, thereby forming the multi-layer article of the invention.

In some embodiment, contacting is by applying a pressure of at least 1 gram/cm². In some embodiments, the pressure is at least 2 gram/cm². In some embodiments, the pressure is at least 4 gram/cm². In some embodiments, the pressure is at least 8 gram/cm².

In some embodiments, the manufacturing process further comprises heating any of the matrix and/or the additional layer prior to, concomitantly with, and/or subsequently to pressing the layers. In some such embodiments, the heating is to a temperature which is above a glass transition temperature and/or melting point (optionally a glass transition temperature) of a polymer composing any of the matrix and/or the additional layer, in accordance with any of the respective embodiments described herein (e.g., 40 °C, 50 °C, 60 °C, 70 °C, 80 °C, including nay range between.

In some embodiments, the manufacturing process further comprises depositing an adhesion promoter, and/or an adhesive on top of the additional layer. In some embodiments, the process further comprises applying a radiation (e.g., U.V. radiation) to activate the adhesive.

### General

As used herein the term "about" refers to ± 10 %.

The terms "comprises", "comprising", "includes", "including", "having" and their conjugates mean "including but not limited to".

The term "consisting of means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

The term "at least partially" as used herein refers to at least 30%, at least 50%, at least 70%, at least 80%, at least 90%, including any range or value therebetween.

The term "substantially", as used herein refers to at least 90%, at least 93%, at least 95%, at least 97%, at least 99%, at least 99.9% including any range or value therebetween.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

As used herein the term "method" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

As used herein, the term "reducing" includes abrogating, substantially inhibiting, slowing or immobilizing the pathogen or microbial load. Furthermore, the term "reducing" includes for reduction or prevention of microbial transmission within the matrix and/or the article of the invention.

Various embodiments and aspects of the present invention as delineated hereinabove and as claimed in the claims section below find experimental support in the following examples.

In the discussion, unless otherwise stated, adjectives such as "substantially" and "about" modifying a condition or relationship characteristic of a feature or features of an embodiment of the invention, are understood to mean that the condition or characteristic is defined to within tolerances that are acceptable for the operation of the embodiment for an application for which it is intended. Unless otherwise indicated, the word "or" in the specification and claims is considered to be the inclusive "or" rather than the exclusive or, and indicates at least one of, or any combination of items it conjoins.

In the description and claims of the present application, each of the verbs, "comprise," "include" and "have" and conjugates thereof, are used to indicate that the object or objects of the verb are not necessarily a complete listing of components, elements or parts of the subject or subjects of the verb.

In some embodiments, the term "reducing", or any grammatical derivative thereof, indicates that at least 20 %, 30 %, 40 %, 50 %, 60 %, 70 %, 80 %, 90 %, or more, reduction of growth or even complete growth inhibition in a given time as compared to the growth in that given time of the pathogen not being exposed to the treatment as described herein. In some embodiments, the term "completely inhibited", or any grammatical derivative thereof, refers to 100 % arrest of growth in a given time as compared to the growth in that given time of the pathogen not being exposed to the treatment as described herein. In some embodiments, the terms "completely inhibited" and "eradicated" including nay grammatical form thereof, are used herein interchangeably.

Additional objects, advantages, and novel features of the present invention will become apparent to one ordinarily skilled in the art upon examination of the following examples, which are not intended to be limiting. Additionally, each of the various embodiments and aspects of the present invention as delineated hereinabove and as claimed in the claims section below finds experimental support in the following examples.

### EXAMPLES

The non-woven matrix is designed for capturing a microbe (e.g., a virus) in the range of 50-400 nm, such as contained within a droplet, for a time sufficient to inactivate the microbe. In some embodiments, the porosity has a median pore size is in the range of 60 -1000 nanometer.

In some embodiments, the non-woven matrix is characterized by a wettability. In some embodiments, the wettability is suitable for allowing contact of a droplet for a time sufficient to inactivate a microbe within the droplet. In some embodiments, the wettability is characterized by a contact angle between 60-90 °.

In some embodiments, the non-woven matrix has an outer surface at least partially ionized. In some embodiments, the non-woven matrix comprises a fiber being positively charged. In some embodiments, the non-woven matrix comprises a pH reducing agent such as to lower the pH (when contacted with a droplet) to a pH lower than 5. An acidic pH is sufficient to induce ionization of the polycation (so as to result in a protonated polycation such as a polyamine) and complexation of the virus with the nanofiber, thereby providing a time sufficient to inactivate the microbe by the biocide embedded within the matrix. In some embodiments, the biocide is the cationic polymer or PVP-I.

### Materials and methods

An exemplary non-woven matrix of the invention has been manufactured by electrospinning of polycaprolactone (PCL) Mw ~ 100,000 form a solution: 18% wt/v (11.73% wt/wt) PCL in chloroform:DMF (3:1 v/v) in an electrospinning apparatus. The applied voltage (during the electrospinning process) was in the range of 9-15 kV. The spinneret-collector distance was 12 cm, and the flow rate of the polymer solution was in the range of 3-10 mL/h. Fiber's diameter was in the range of 100 nm to 1 micron.

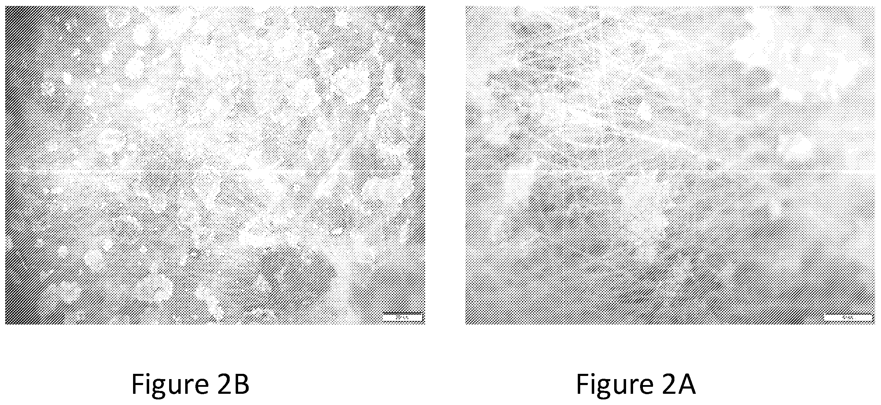

Simultaneously a solution of 10% w/w povidone-iodine (IODO-VIT solution, VITAMED, Israel) suspended in 30% w/w ethanol (&0%) was electro-sprayed with a flow rate in the range of 5 to 20 mL/h and applied voltage in the range of 10-15 kV. The spinneret-collector distance was 11 cm. Optical images of the resulted filter are shown in Figure 2.

### EXAMPLE 1

### MANUFACTURING PROCESS OF AN EXEMPLARY ARTICLE

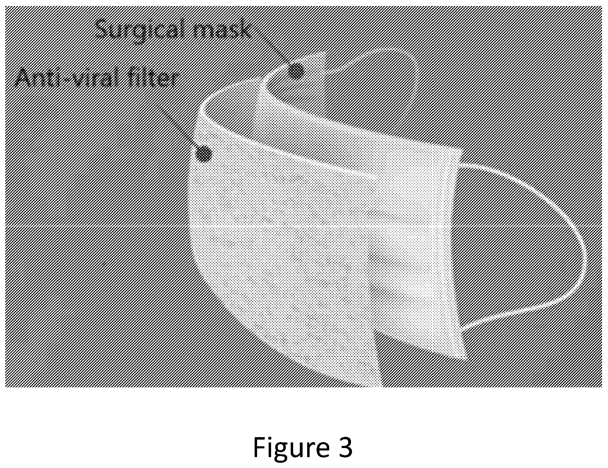

In some embodiments, the non-woven matrix of the invention is in a form of a sticker is a single-use device for the improvement of the antimicrobial protection of surgical masks, especially to prevent viral infections. The sticker is an accessory that is designed to be attached onto the outer surface of a surgical mask, providing extra protection against infections carried by airborne droplets (Figure 3). These airborne particles, wet or dry, may carry pathogens such as viruses, bacteria, fungi, and yeasts. The pathogens are transmitted as a result of emitted droplets through coughing, sneezing, breathing, etc. Thus, patients with contagious diseases or dangerous viruses must be equipped with a suitable type of mask with a sufficient level of protection. The sticker upgrade masks physical and biological performance. A surgical mask covers the user's nose and mouth and provides a physical barrier to fluids and particulate materials. It is designed to prevent the wearer from spreading droplets in the vicinity.

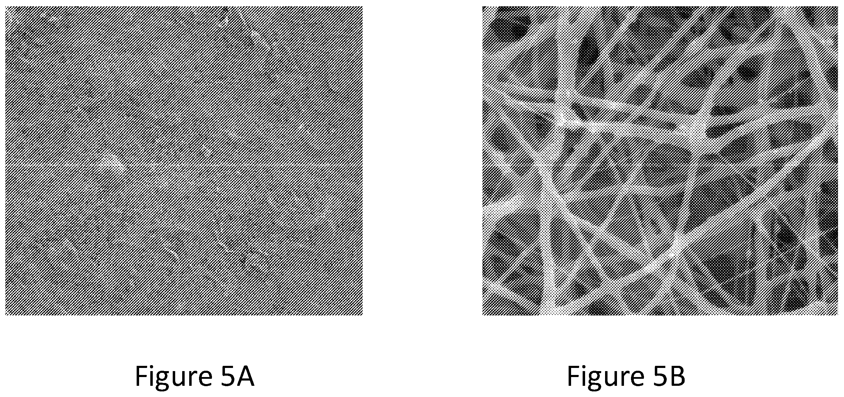

In some embodiments, in a non-limited configuration the article of the invention (e.g. the sticker) is composed of a support layer of non-woven microfibers, polymer nanofibers matrix integrated with a disinfectant, povidone-iodine (PVP-I). When emitted droplets through coughing or sneezing hit the sticker, the droplets are absorbed in the nanofiber fabric, and the pathogens are trapped between the nanofibers. The disinfectant, PVP-I, then kills or neutralizes the pathogens. A non-limiting example of the multi-layer article (or sticker) is illustrated in Figure 4. Figures 5A-B present the sticker's nanofiber network (filter) based on Polycaprolactone (PCL) impregnated with povidone-iodine (PVP-I) as an antimicrobial/ antiviral delivery system. The images of the fibers mat show the porosity of the electrospun fibers mat ranged between 88 to 92 %.

The article of the invention (e.g. in a form of a sticker) is attached to the outer surface of the surgical mask by using an adhesive layer (MEDIFIX 3100, Organik Kimya). The adhesive is a pressure-sensitive adhesive developed medical tape, bandages, drapes and dressing applications and is approved by the FDA. This adhesive layer is compatible with the materials used for the production of standard surgical masks. There is no contact between the facial skin or mucous with the sticker, as illustrated in Figure 3. Experimental results of wearing more than 30 face masks (manufactured by KEQI in China) combined with the sticker, after wearing of 8 hours, showed, using an optical microscope, no traces of the adhesive. Thus, it is possible to conclude that no migration of the adhesive through the mask takes place during usage.

The article of the invention (e.g. in a form of a sticker) is easy to use and user-friendly as it does not block the air and does not cause the user any disturbance or discomfort. The pressure drop (differential pressure) across mask materials is an indicator of medical facemask breathability. To measure the differential pressure, it is required to draw air through a measured surface area at a constant airflow rate. In order to qualify the sticker material, tests have been performed according to EN 14683 (here differential pressure), as exemplified hereinbelow.

### EXAMPLE 2

### AIR PERMEABILITY

The article of the invention (e.g. in a form of a sticker) is easy to use and user-friendly as it does not block the air and does not cause the user any disturbance or discomfort. The pressure drop (differential pressure) across mask materials is an indicator of medical facemask breathability. To measure the differential pressure, it is required to draw air through a measured surface area at a constant airflow rate. Test have been performed in accordance with the requirement of Annex C of EN 14683:2019.

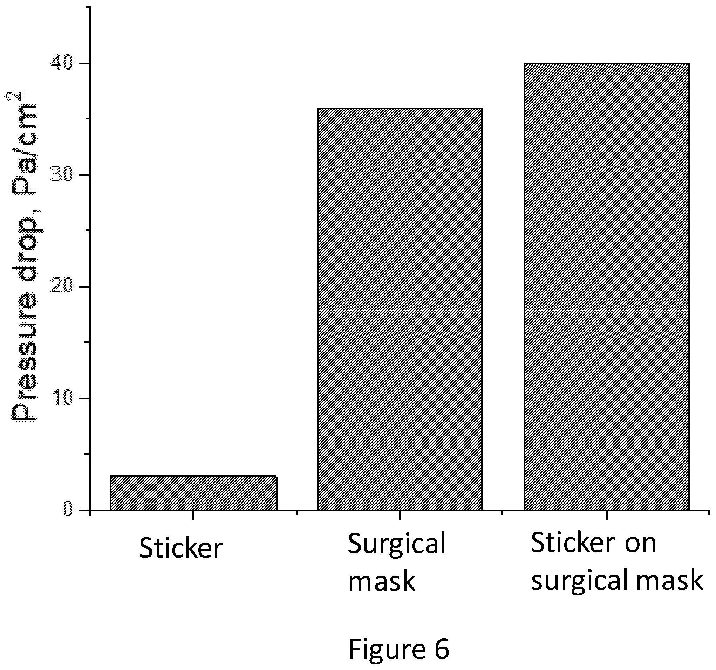

In a pressure drop experiment carried at the Technion, the pressure drop was measured across three samples: (i) the article of the invention (e.g. in a form of a sticker), (ii) a surgical mask, and (iii) the article of the invention (e.g. in a form of a sticker) attached to the surgical mask (see Figure 6). The surgical mask (Safetech) is a three-ply mask, is manufactured by an Israeli company, Supergum.

The pressure drop results are presented in Figure 6. The results show that the increase of the pressure drop after attaching the sticker increases the pressure drop in ~ 10%. Still the cumulative pressure drop is below the maximal pressure drop allowed by the EN 14683 for type IR & IIR (splash resistant) = < 49.0 Pa/cm².

The article of the invention (e.g. in a form of a sticker) is upgrading the physical filtration of every mask. The improvement of the filtration is based on adding the sticker, which is in principle an additional filter. In order to test the filtration efficiency and flow resistance, the inventors performed a test according to 42 CFR Part 84 - APPROVAL OF RESPIRATORY PROTECTIVE DEVICES, Subpart K - Non-Powered Air-Purifying Particulate Respirators, (10-1-19 Edition), Referring to the N95 filtration level. The filtration efficiency by paraffin oil was also tested.

Five samples were tested: tricot fabric (black color), article of the invention (e.g. in a form of a sticker), article of the invention (e.g. in a form of a sticker)attached to tricot fabric, Surgical mask (made in China), and the article of the invention (e.g. in a form of a sticker) attached to a surgical mask.

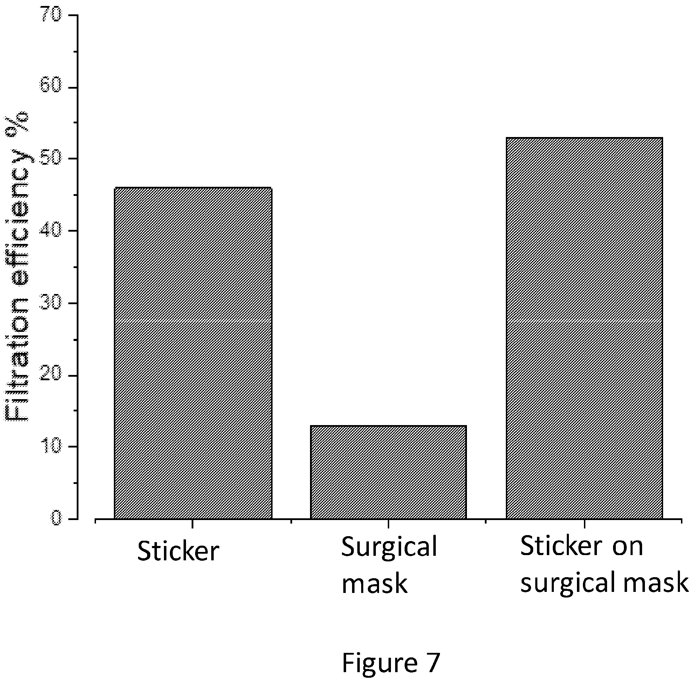

Test fluid: NaCl solution, with particle size as specified: Count Median Diameter: 0.075 µm, Mass mean Diameter: 0.26 µm, standard deviation: < 1.86 (according to device specification). Air flow rate: 85 liters / minute. Results are summarized in Figure 7.

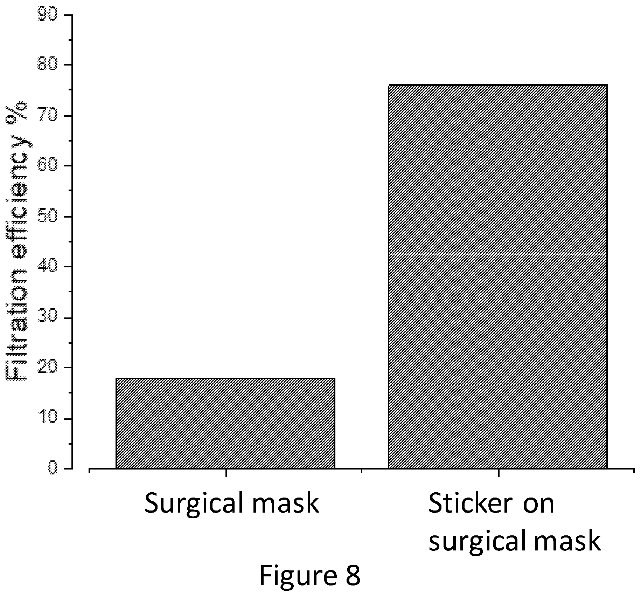

The inventors tested the filtration efficiency by paraffin oil. Particle size 0.5-3 µm. Test Principle: Count the particle before and after the mask in a constant time period. Both filtration tests show that an increase in filtration efficiency after attaching the article of the invention (e.g. in a form of a sticker), as represented by Figure 8.

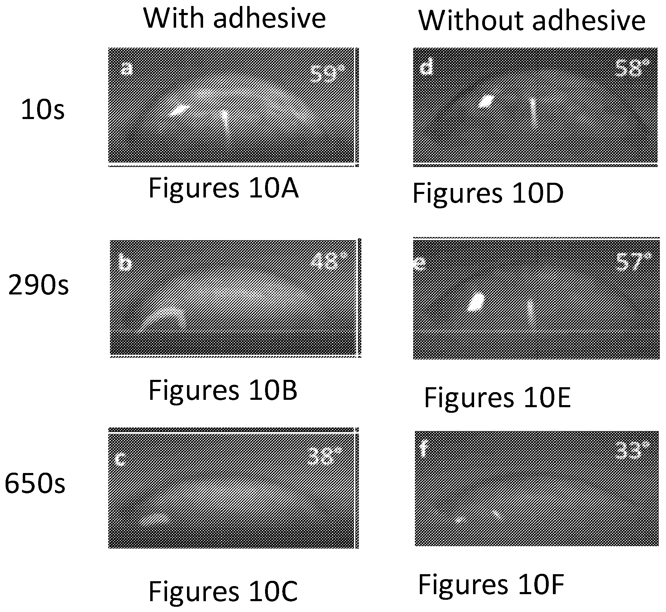

The contact angle of the article of the invention (e.g. in a form of a sticker) with artificial saliva (The artificial saliva contained 0.0050% CaSO4 /2 H20, 0.0063% NaCl, 0.0025% KCI, 0.0052% KH2PO4, and 0.0061% Na2HPO4 in deionized water) exhibit changes with time, thus, the dynamic contact angle was measured. The contact angle as a function of time is summarized in Figure 10. A decrease in contact angle with time, for all the samples, is observed. This result indicates that the artificial saliva absorbs into the article's outer layer over time. Moreover, the initial contact angle of 60° and less, for all samples, reflects the hydrophilic nature of article's outer layer (or outer surface), composed of PCL fibers.

### EXAMPLE 3

### BIOCIDAL EFFICIENCY

The inventors carried another test to find the biocidal efficacy of the article of the invention. The test was based on the modified standard: AATCC Test Method 100-2019: "Antibacterial Finishes on Textile Materials: Assessment of" and on the method of Strauss Water, Detection of coliphage (MS2) by Double Agar Layer in water. The test samples (which were cut into circles of 4.8 cm by the client) were sterilized by UV light. The cut circles were inoculated with 200 ml of the suspended Coliphage MS2 -ATCC 15597.

At zero time (blank), after 5 minutes (Table 1), and after 60minutes (Table 3), the fabric circles were washed by a neutralizing solution (20 ml), and the extracted coliphage was inoculated according to the double-layer method. Four samples were tested: A- control, an exemplary article of the invention (sticker) without a biocidal agent attached to a surgical mask, B-exemplary article of the invention (sticker) with a biocidal agent attached to a surgical mask, C-exemplary article of the invention (sticker) with a biocidal agent (66 %) attached to a surgical mask, and D- a neat surgical mask. The results rea summarized in Table 1 and 2 below.

**Table 1: Results obtained with MS2-ATCC after 5 minutes**

| **Lab no.** | **Sample no.** | **Viral count (after zero time) PFU/ml** | | | **Viral count (after 5 minutes) PFU/ml** | | | **Average Log Decrease after 5 minutes** |
|---|---|---|---|---|---|---|---|---|
| 125A | A= control (w/o PVP-I, Blue Mask+PET+310 0+77) | 1.50E+06 | 1.20E+06 | 1.05E+06 | 9.35E+05 | 1.11E+06 | 9.25E+05 | 0.0 |
| 126A | B= with PVP-I, Blue Mask+PET+310 0+77 | --- | | | 3.00E+03 | 1.50E+04 | 3.70E+03 | **2.2** |
| 127A | **C=with** 0.66 PVP-I, Blue Mask+PET+310 0 +77 | --- | | | 3.95E+04 | 3.05E+04 | 6.45E+04 | 1.6 |
| 128A | D= Blue mask | --- | | | 1.44E+06 | 8.95E+05 | 8.35E+05 | 0.0 |

**Table 2: Results obtained with MS2-ATCC after 60 minutes**

| **Lab no.** | **Sample no.** | **Viral count (after zero time) PFU/ml** | | | **Viral count (after 60 minutes) PFU/ml** | | | **Average Log Decrease after 60 minutes** |
|---|---|---|---|---|---|---|---|---|
| 125A | A= control (w/o PVP-I, Blue Mask+PET+31 00+77) | 1.50E+06 | 1.20E+6 | 1.05E+6 | 1.50E+06 | 1.68E+06 | 1.41E+06 | 0.0 |
| 126A | B= with PVP-I, Blue Mask+PET+31 00+77 | --- | | | 1.00E+02 | <100 | <100 | 4.1 |
| 127A\ | C=with 0.66 PVP-I, Blue Mask+PET+31 00 +77 | --- | | | 4.00E+02 | 150E+00 | <100 | 3.9 |
| 128A | D= Blue mask | --- | | | 160E+06 | 1.75E+06 | 1.58E+06 | 0.0 |

Based on the results represented in Tables 1 and 2 the inventors concluded that:
1) No change was seen on the control sample A and on the blue mask D after 5 and 60 minutes;
2) A decrease of 2.2 and 1.6 orders was observed on samples B and C after 5 minutes, respectively .
3) A decrease of 4.1 and 3.9 orders was observed on samples B and C after 60 minutes, respectively .

In practice, assuming that the average droplet diameter is 0.1 mm, the volume of the drop which hits the article (or sticker) is < 10 ul. In this case, as was tested in the previous tests, the neutralization of the viruses will take a few seconds.

Furthermore, the inventors performed biocidal tests with COVID-19, showing superior performance of the article of the invention, compared to a regular surgical mask.

While the present invention has been particularly described, persons skilled in the art will appreciate that many variations and modifications can be made. Therefore, the invention is not to be construed as restricted to the particularly described embodiments, and the scope and concept of the invention will be more readily understood by reference to the claims, which follow.

## Claims

1. A biocidal non-woven matrix comprising an electrospun nanofiber comprising at least one polymer selected from a cationic polymer, a non-ionic polymer and an anionic polymer or a combination thereof, wherein:
a diameter of said electrospun nanofiber is between 50 to 1500 nanometers;
a surface of said matrix is **characterized by** a water contact angle of less than 90°;
the matrix comprises a plurality of pores and is **characterized by** a porosity suitable for capturing a microbe in a range between 50 and 400 nm; said porosity is at least 80%, and said plurality of pores is **characterized by** a median pore size in a range between 60 and 800 nanometers;
wherein said porosity allows for air permeability, k between 10⁻⁷ [m²] and 10⁻⁵ [m²] for flow rate of 8 L/min; and wherein said matrix further comprises between 0.1 and 40% of a biocidal agent by weight of said matrix.

2. The biocidal non-woven matrix of claim 1, wherein said biocidal agent is in contact with said electrospun nanofiber and is homogeneously dispersed within said matrix; wherein said biocidal agent comprises a bactericidal agent, a virucidal agent, or both; optionally wherein said biocidal agent is selected from the group consisting of poly(vinyl pyrrolidone iodine) (PVP-I), and Chlorhexidine digluconate, Didecyldimethylammonium chloride (DDAC), Silver and Copper ions.

3. The biocidal non-woven matrix of claim 1 or 2, wherein said at least one polymer is selected from the group consisting of polycaprolactone (PCL), poly(vinyl pyrrolidone) (PVP), poly(vinyl alcohol) (PVA), poly(lactic-co-glycolic acid) (PLGA), polylactic acid (PLA), polyglycolic acid (PGA), poly(vinylidene fluoride-co-hexafluoropropylene) and polysulfone, or any combination thereof.

4. The biocidal non-woven matrix of anyone of claims 1 to 3, further comprising a pH reducing agent wherein the pH reducing agent lowers the pH to less than 5 at a location within said matrix when in contact with a liquid droplet.

5. The biocidal non-woven matrix of any one of claims 1 to 4, being in a form of a layer having a thickness of 10 to 500 micrometers; optionally wherein said biocidal non-woven matrix is further in contact with an adhesive layer; and wherein said biocidal non-woven matrix is **characterized by** a pressure drop of less than 5 Pa/cm² at a flow rate of 8 L/min.

6. A multi-layered article comprising a first layer comprising the biocidal non-woven matrix of any one of claims 1 to 5 bound to an additional layer, wherein said additional layer comprises a non-woven matrix comprising a plurality of polymeric microfibers; and wherein said multi-layered article is **characterized by** air pressure drop of less than 49 Pa/cm².

7. The multi-layered article of claim 6, wherein said polymeric microfibers are spun-bond, or spun lace fibers; and wherein said polymeric microfibers comprise a polymer selected from the group consisting of: a polyolefin, a polyester, and a polyamide, optionally wherein said polymer is selected form polyethylene, polypropylene, and polyethylene terephthalate, including any combination or a copolymer thereof.

8. The multi-layered article of claim 6 or 7, wherein any one of: the textile weight of said additional layer is between 40 to 60 g/m²; a thickness of said additional layer is between 100 to 500 microns; an outer surface of said additional layer comprises an adhesive layer; and optionally wherein said adhesive layer comprises a pressure sensitive adhesive.

9. The multi-layered article of claim 8, adhered to a substrate via said adhesive layer and is **characterized by** an increase of air pressure drop of about 10%, compared to air pressure drop of said substrate; and wherein the multi-layered article is a face mask.

10. A process for manufacturing the multi-layered article of any one of claims 6 to 9, comprising
(i) manufacturing a fibrous mat by electrospinning a polymeric solution, thereby obtaining said fibrous mat comprising an electrospun nanofiber comprising at least one polymer selected from a cationic polymer, a non-ionic polymer and an anionic polymer or a combination thereof; said electrospun nanofiber has a diameter between 50 to 1500 nanometers; said fibrous mat has a porosity of at least 80% and is **characterized by** a median pore size in a range between 60 and 800 nanometers;
(ii) applying a composition comprising a biocidal agent on said fibrous mat, thereby forming the biocidal non-woven matrix of any one of claims 1 to 5;
(iii) providing an additional layer comprising spun-bond, or spunlace polymeric fibers and binding said additional layer with said biocidal non-woven matrix, thereby obtaining the multi-layered article.

11. The process of claim 10, wherein the applying is by electro-spraying or airbrush spraying; and wherein the step (i) and the step (ii) are performed simultaneously or subsequently.

12. The process of claim 10 or 11, wherein said binding comprises applying pressure and optionally exposing to a temperature sufficient for binding of additional layer with said biocidal non-woven matrix.

13. The process of any one of claims 10 to 12, wherein said polymeric fibers are microfibers comprising a polymer selected from the group consisting of: a polyolefin, a polyester, and a polyamide, optionally wherein said polymer is selected form polyethylene, polypropylene, and polyethylene terephthalate, including any combination or a copolymer thereof.

## Patentansprüche

1. Biozide Vliesmatrix, umfassend eine elektrogesponnene Nanofaser, umfassend
mindestens ein Polymer, ausgewählt aus einem kationischen Polymer, einem nichtionischen Polymer und
ein anionisches Polymer oder eine Kombination davon, wobei:
ein Durchmesser der elektrogesponnenen Nanofaser zwischen 50 und 1500 Nanometern liegt;
eine Oberfläche der genannten Matrix durch einen Wasserkontaktwinkel von weniger als 90° gekennzeichnet ist;
die Matrix eine Vielzahl von Poren umfasst und sich durch eine Porosität auszeichnet, die geeignet ist, Mikroorganismen im Bereich zwischen 50 und 400 nm einzufangen; die Porosität mindestens 80% beträgt, und die Vielzahl von Poren durch eine mittlere Porengröße im Bereich zwischen 60 und 800 Nanometern gekennzeichnet ist;
wobei die Porosität eine Luftdurchlässigkeit k zwischen 10⁻⁷ [m²] und 10⁻⁵ [m²] ermöglicht, für eine Durchflussrate von 8 L/min; und wobei die Matrix ferner zwischen 0,1 und 40 Gew.-% eines Biozidmittels, bezogen auf das Gewicht der Matrix, umfasst.

2. Biozide Vliesmatrix nach Anspruch 1, wobei das Biozidmittel mit der elektrogesponnenen Nanofaser in Kontakt steht und homogen in der Matrix dispergiert ist; wobei das Biozidmittel ein bakterizides Mittel, ein viruzides Mittel oder beides umfasst; optional wobei das Biozidmittel ausgewählt ist aus der Gruppe bestehend aus Polyvinylpyrrolidoniodid (PVP-I) und Chlorhexidindigluconat, Didecyldimethylammoniumchlorid (DDAC), Silber- und Kupferionen.

3. Biozide Vliesmatrix nach Anspruch 1 oder 2, wobei das mindestens eine Polymer ausgewählt ist aus der Gruppe bestehend aus Polycaprolacton (PCL), Polyvinylpyrrolidon (PVP), Polyvinylalkohol (PVA), Poly(milchsäure-co-glykolsäure) (PLGA), Polymilchsäure (PLA), Polyglykolsäure (PGA), Poly(vinylidenfluorid-co-hexafluorpropylen) und Polysulfon oder einer beliebigen Kombination davon.

4. Biozide Vliesmatrix nach einem der Ansprüche 1 bis 3, ferner umfassend ein pH-Senkungsmittel, wobei das pH-Senkungsmittel den pH-Wert an einer Stelle innerhalb der Matrix auf weniger als 5 senkt, wenn es mit einem Flüssigkeitstropfen in Kontakt kommt.

5. Biozide Vliesmatrix nach einem der Ansprüche 1 bis 4, die als Schicht mit einer Dicke von 10 bis 500 Mikrometern ausgebildet ist; optional wobei die biozide Vliesmatrix zusätzlich mit einer Klebeschicht in Kontakt steht; und die biozide Vliesmatrix durch einen Druckabfall von weniger als 5 Pa/cm² bei einer Durchflussrate von 8 L/min gekennzeichnet ist.

6. Mehrschichtiger Artikel, umfassend eine erste Schicht, die die biozide Vliesmatrix nach einem der Ansprüche 1 bis 5 umfasst und diese mit einer zusätzlichen Schicht verbunden ist, wobei diese zusätzliche Schicht eine Vliesmatrix aus mehreren polymeren Mikrofasern umfasst; und wobei der mehrschichtige Artikel durch einen Luftdruckabfall von weniger als 49 Pa/cm² gekennzeichnet ist.

7. Mehrschichtiger Artikel nach Anspruch 6, wobei es sich bei den polymeren Mikrofasern um Spinnvlies- oder Spinnvliesfasern handelt; und wobei die polymeren Mikrofasern ein Polymer umfassen, ausgewählt aus der Gruppe bestehend aus: einem Polyolefin, einem Polyester und einem Polyamid, optional wobei das Polymer aus Polyethylen, Polypropylen und Polyethylenterephthalat, einschließlich einer beliebigen Kombination oder eines Copolymers davon, ausgewählt ist.

8. Mehrschichtiger Artikel nach Anspruch 6 oder 7, wobei eines der folgenden gilt: das Textilgewicht der zusätzlichen Lage zwischen 40 und 60 g/m² liegt; eine Dicke der zusätzlichen Schicht 100 bis 500 Mikrometer beträgt; eine Außenfläche der zusätzlichen Schicht eine Klebeschicht umfasst; und optional wobei die Klebeschicht einen druckempfindlichen Klebstoff umfasst.

9. Mehrschichtiger Artikel nach Anspruch 8, der mittels der Klebeschicht auf einem Substrat befestigt ist, **gekennzeichnet durch** eine Erhöhung des Luftdruckabfalls um etwa 10%, im Vergleich zum Luftdruckabfall des Substrats; und wobei es sich bei dem mehrschichtigen Artikel um eine Gesichtsmaske handelt.

10. Prozess zur Herstellung des mehrschichtigen Artikels nach einem der Ansprüche 6 bis 9, umfassend
(i) Herstellen einer Fasermatte durch Elektrospinnen einer Polymerlösung, um dadurch die Fasermatte zu erhalten, die eine elektrogesponnene Nanofaser umfasst, die mindestens ein Polymer umfasst, das aus einem kationischen Polymer, einem nichtionischen Polymer und einem anionischen Polymer oder einer Kombination davon ausgewählt ist; die elektrogesponnene Nanofaser einen Durchmesser zwischen 50 und 1500 Nanometern aufweist; die Fasermatte eine Porosität von mindestens 80 % aufweist und durch eine mittlere Porengröße im Bereich zwischen 60 und 800 Nanometern gekennzeichnet ist;
(ii) Aufbringen einer Zusammensetzung, die ein Biozidmittel auf die Fasermatte umfasst, wodurch die biozide Vliesmatrix nach einem der Ansprüche 1 bis 5 gebildet wird;
(iii) Bereitstellen einer zusätzlichen Schicht umfassend Spun-Bond oder Spinnvlies-Polymerfasern und Verbinden dieser zusätzlichen Schicht mit der bioziden Vliesmatrix, wodurch der mehrschichtige Artikel erhalten wird.

11. Verfahren nach Anspruch 10, wobei das Aufbringen durch Elektrosprühen oder Airbrush-Sprühen erfolgt; und wobei Schritt (i) und Schritt (ii) gleichzeitig oder nacheinander durchgeführt werden.

12. Verfahren nach Anspruch 10 oder 11, wobei das Verbinden das Aufbringen von Druck und optional das Aussetzen an eine Temperatur umfasst, die für das Verbinden einer zusätzlichen Schicht mit der bioziden Vliesmatrix ausreicht.

13. Verfahren nach einem der Ansprüche 10 bis 12, wobei es sich bei den Polymerfasern um Mikrofasern handelt, die ein Polymer umfassen, ausgewählt aus der Gruppe bestehend aus: einem Polyolefin, einem Polyester und einem Polyamid, optional wobei das Polymer aus Polyethylen, Polypropylen und Polyethylenterephthalat, einschließlich einer beliebigen Kombination oder eines Copolymers davon, ausgewählt ist.

## Revendications

1. Matrice non tissée biocide comprenant une nanofibre électrofilée comprenant
au moins un polymère choisi parmi un polymère cationique, un polymère non ionique et
un polymère anionique ou une combinaison de ceux-ci, dans laquelle :
un diamètre de ladite nanofibre électrofilée est compris entre 50 et 1500 nanomètres ;
une surface de ladite matrice est **caractérisée par** un angle de contact avec l'eau inférieur à 90° ;
la matrice comprend une pluralité de pores et est **caractérisée par** une porosité adaptée à la capture d'un microbe dans une plage entre 50 et 400 nm ; ladite porosité est au moins 80 %, et ladite pluralité de pores est **caractérisée par** une taille de pore médiane dans une plage entre 60 et 800 nanomètres ;
dans laquelle ladite porosité permet une perméabilité à l'air, k entre 10⁻⁷ [m²] et 10⁻⁵ [m²] pour un débit d'écoulement de 8 L/min ; et dans laquelle ladite matrice comprend en outre entre 0,1 et 40 % d'un agent biocide en poids de ladite matrice.

2. Matrice non tissée biocide selon la revendication 1, dans laquelle ledit agent biocide est en contact avec ladite nanofibre électrofilée et est dispersé de manière homogène au sein de ladite matrice ; dans laquelle ledit agent biocide comprend un agent bactéricide, un agent virucide, ou les deux ; facultativement dans laquelle ledit agent biocide est choisi parmi le groupe constitué de poly(vinylpyrrolidone iodée) (PVP-I), et de digluconate de chlorhexidine, de chlorure de didécyldiméthylammonium (DDAC), d'ions argent et cuivre.

3. Matrice non tissée biocide selon la revendication 1 ou 2, dans laquelle ledit au moins un polymère est choisi parmi le groupe constitué de polycaprolactone (PCL), de poly(vinylpyrrolidone) (PVP), de poly(alcool vinylique) (PVA), de poly(acide lactique-co-glycolique) (PLGA), d'acide polylactique (PLA), d'acide polyglycolique (PGA), de poly(fluorure de vinylidène-co-hexafluoropropylène) et de polysulfone, ou une quelconque combinaison de ceux-ci.

4. Matrice non tissée biocide selon l'une quelconque des revendications 1 à 3, comprenant en outre un agent réducteur de pH dans laquelle l'agent réducteur de pH abaisse le pH à moins de 5 à un endroit dans ladite matrice lorsqu'il est en contact avec une gouttelette de liquide.

5. Matrice non tissée biocide selon l'une quelconque des revendications 1 à 4, étant sous la forme d'une couche présentant une épaisseur de 10 à 500 micromètres ; facultativement dans laquelle ladite matrice non tissée biocide est en outre en contact avec une couche adhésive ; et dans laquelle ladite matrice non tissée biocide est **caractérisée par** une chute de pression inférieure à 5 Pa/cm² à un débit d'écoulement de 8 L/min.

6. Article multicouche comprenant une première couche constituée de la matrice non tissée biocide selon l'une quelconque des revendications 1 à 5, liée à une couche supplémentaire, dans lequel ladite couche supplémentaire est constituée d'une matrice non tissée comprenant une pluralité de microfibres polymères ; et dans lequel ledit article multicouche est **caractérisé par** une chute de pression d'air inférieure à 49 Pa/cm².

7. Article multicouche selon la revendication 6, dans lequel lesdites microfibres polymères sont des fibres filées-liées ou hydroliées ; et dans lequel lesdites microfibres polymères comprennent un polymère choisi parmi le groupe consistant en : une polyoléfine, un polyester et un polyamide, facultativement dans lequel ledit polymère est choisi parmi le polyéthylène, le polypropylène et le polyéthylène téréphtalate, incluant une quelconque combinaison ou un copolymère de ceux-ci.

8. Article multicouche selon la revendication 6 ou 7, dans lequel l'un quelconque des éléments suivants s'applique : le poids textile de ladite couche supplémentaire est compris entre 40 et 60 g/m²; une épaisseur de ladite couche supplémentaire est comprise entre 100 et 500 micromètres ; une surface extérieure de ladite couche supplémentaire comprend une couche adhésive ; et, facultativement, dans lequel ladite couche adhésive comprend un adhésif sensible à la pression.

9. Article multicouche selon la revendication 8, collé à un substrat par l'intermédiaire de ladite couche adhésive, et est **caractérisé par** une augmentation de la chute de pression d'air d'environ 10 %, par rapport à la chute de pression d'air dudit substrat ; et dans lequel l'article multicouche est un masque facial.

10. Processus de fabrication de l'article multicouche selon l'une quelconque des revendications 6 à 9, comprenant
(i) la fabrication d'un tapis fibreux par électrofilage d'une solution polymère, en obtenant ainsi ledit tapis fibreux comprenant une nanofibre électrofilée comprenant au moins un polymère choisi parmi un polymère cationique, un polymère non ionique et un polymère anionique ou une combinaison de ceux-ci ; ladite nanofibre électrofilée présente un diamètre compris entre 50 et 1500 nanomètres ; ledit tapis fibreux présente une porosité d'au moins 80 % et est **caractérisé par** une taille de pore médiane dans une plage entre 60 et 800 nanomètres ;
(ii) l'application d'une composition comprenant un agent biocide sur ledit tapis fibreux, en formant ainsi la matrice non tissée biocide selon l'une quelconque des revendications 1 à 5 ;
(iii) la fourniture d'une couche supplémentaire comprenant des fibres polymères filées-liées ou hydrofilées et lier ladite couche supplémentaire à ladite matrice non tissée biocide, en obtenant ainsi l'article multicouche.

11. Procédé selon la revendication 10, dans lequel l'application se fait par électropulvérisation ou par pulvérisation à l'aérographe ; et dans lequel l'étape (i) et l'étape (ii) sont réalisées simultanément ou successivement.

12. Procédé selon la revendication 10 ou 11, dans lequel ladite liaison comprend l'application d'une pression et facultativement l'exposition à une température suffisante pour la liaison d'une couche supplémentaire avec ladite matrice non tissée biocide.

13. Procédé selon l'une quelconque des revendications 10 à 12, dans lequel lesdites fibres polymères sont des microfibres comprenant un polymère choisi parmi le groupe consistant en : une polyoléfine, un polyester et un polyamide, facultativement dans lequel ledit polymère est choisi parmi le polyéthylène, le polypropylène et le polyéthylène téréphtalate, incluant une quelconque combinaison ou un copolymère de ceux-ci.
